# EUROPEAN PATENT SPECIFICATION

(11) **EP 4 252 389 B1**
(45) Date of publication and mention of the grant of the patent: **21.02.2024**
(21) Application number: 22808781.3
(22) Date of filing: 24.10.2022
(51) Int. Cl.: H04L 9/40

(54) **METHOD AND APPARATUS FOR PREVENTING MALICIOUS NETWORK TRAFFIC**
VERFAHREN UND VORRICHTUNG ZUR VERHINDERUNG VON BÖSARTIGEM NETZWERKVERKEHR
PROCÉDÉ ET APPAREIL POUR EMPÊCHER UN TRAFIC DE RÉSEAU MALVEILLANT

(30) Priority: 25.10.2021 DE 102021127714
(43) Date of publication of application: 04.10.2023
(73) Proprietor: marbis GmbH, 76185 Karlsruhe (DE)
(72) Inventor: BECKER, André, 76185 Karlsruhe (DE); WEISE, Steffen, 04107 Leipzig (DE); REUSCH, Stefan, 94121 Salzweg (DE); SCHABEL, Leopold, 79114 Freiburg (DE)
(74) Representative: Mertzlufft-Paufler, Cornelius
(86) International application number: PCT/EP2022/079544
(87) International publication number: WO 2023/072810

(56) References cited:
- US-A1- 2012 159 159
- MOHAMMED ALHABEEB ET AL: "Preventing Denial of Service Attacks in Government E-Services Using a New Efficient Packet Filtering Technique", PARALLEL AND DISTRIBUTED PROCESSING WITH APPLICATIONS (ISPA), 2011 IEEE 9TH INTERNATIONAL SYMPOSIUM ON, IEEE, 26 May 2011 (2011-05-26), pages 262-269, XP031895005, DOI: 10.1109/ISPA.2011.54 ISBN: 978-1-4577-0391-1
- P. ANANTHI ET AL: "Two level Authentication and Packet Marking Mechanism for Defending against DoS and DDoS Attacks", INTERNATIONAL JOURNAL OF COMPUTER APPLICATIONS, vol. 63, no. 7, 1 February 2013 (2013-02-01), pages 41-45, XP055425653, DOI: 10.5120/10481-5220

## Description

### BACKGROUND OF THE INVENTION

Malicious network traffic may be encountered in various types of network structures. It may, inter alia, be used to perform attacks against application servers, such as game servers, in networks comprising the application server and a plurality of client devices, such as game clients or game client devices.

Malicious network traffic, in particular game traffic, may comprise a particularly high amount of data packets transmitted from a malicious user of one of the client devices to the game server. In a successful attack, the application server or the network connection may be so overwhelmed by the received malicious traffic that it cannot keep up with the work for legitimate users or that the network port of the application server is congested. That results in the service provided by the application server not being available to the legitimate users anymore, which is generally referred to as a denial of service (DoS), caused by a DoS-attack. A DoS-attack performed by a particularly high number of client devices is generally referred to as a distributed denial of service (DDoS)-attack. In various network structures, an attack is already considered successful when the attacker is or the attackers are able to degrade service quality, e.g., by causing lag.

Conventional methods and apparatus aim to prevent said successful DoS- or DDoS-attacks by mitigating the load of malicious network traffic reaching an application server and/or to maintain a reasonable service quality available to legitimate users while an attack is happening. This is generally done by recognizing patterns within the received network traffic. As every application, in particular every game application, normally requires different game protocols and thus different or differently structured payloads of the data packets, known pattern recognition processes are generally based on the content of the header of data packets comprised by the network traffic, rather than by the payload of the data packets.

Patterns within the network traffic may be recognized based on predetermined or known patterns that are considered to represent an attack. Alternatively, patterns may be recognized by identifying a (substantial) deviation within the workload or network traffic that was previously received or that appears during normal operations when no attacks take place.

However, these protection measures can be circumvented relatively easily, as the information contained in the header, in particular source information, e.g. the IP address of the client device, may be altered or forged. Moreover, particular network structures exist, for example a gaming network comprising a game server and a plurality of client devices, in which no or a relatively low amount of malicious network (game) traffic reaching the application server can be tolerated without substantially impacting network traffic factors influencing user experience, such as increasing an application server response time or lag.

However, the recognition of patterns takes time. For example, a single new connection from a specific range of IP addresses could be a legitimate user. Thousands of connection attempts from that IP address range may represent a pattern and may thus be classified as an attack. Hence, due to the delay in recognition, too few malicious data packets may be blocked.

Beyond that, such systems or processes may be exploited, as patterns may be created by malicious users in order to have one or more legitimate users blocked. For example, knowing the IP address or an IP address range of at least one legitimate user, an attacker may spoof traffic to originate from the IP address or the IP address range of the one or more legitimate users, causing the system or process to block legitimate network traffic that shares properties with the maliciously created pattern. In other words, too many data packets may be blocked.

In MOHAMMED ALHABEEB ET AL: "Preventing Denial of Service Attacks in Government E-Services Using a New Efficient Packet Filtering Technique", 26 May 2011, XP031895005, a security approach is described which can be used to protect government critical systems against DoS flooding attacks. This approach uses a packet filtering mechanism, called Token Filtering Technique.

From P. ANANTHI ET AL: "Two level Authentication and Packet Marking Mechanism for Defending against DoS and DDoS Attacks", 1 February 2013, XP055425653, a token-based authentication and Packet Marking mechanism (TAPM) for preventing IP spoofing is known.

In US 2012/159159 A1, a system and a method for secure communications in a communication system are described.

The problem underlying the present invention therefore is to improve network attack protection, in particular to provide an improved protection method, apparatus or system for preventing malicious network traffic from reaching an application server.

### SUMMARY

^{~}2, r The invention is set out in the appended independent claims. T

J According to the invention, there is provided a method for preventing or blocking malicious network traffic, the method comprising: providing, by a key generation appliance, a client key to a client device; receiving, by a control appliance, a data packet intended for an application server from the client device; determining, by the control appliance, whether the data packet comprises the client key; forwarding the data packet, by the control appliance, to the application server in response to a determination that the data packet comprises the client key; and/or blocking the data packet, by the control appliance, in response to a determination that the data packet does not comprise the client key.

In other words: The data packet is forwarded by the control appliance only in response to a determination that the data packet comprises the client key. That is, the control appliance may, as a default action, block all data packets, i.e., all traffic, not comprising the client key provided by the key generation appliance to the client device. Hence, malicious network traffic may be reliably detected on a packet-by-packet basis, thereby identifying and blocking single, in particular first, malicious network packets of an attack. In that manner, a deterministic approach is provided which may prevent a substantially increased number of, in particular all, malicious data packets from reaching the application server.

Additionally, or alternatively, a plurality of data packets intended for the application server may be received, in particular successively received, by the control appliance, from the client device, wherein the control appliance determines whether multiple, in particular all, of the plurality of data packets comprise the client key and forwards all data packets of the multiple data packets that comprise the client key to the application server and/or blocks all data packets of the multiple data packets that do not comprise the client key. For example, the plurality of data packets may comprise a first and a subsequently received second data packet.

More particularly, the control appliance may block all data packets of the multiple data packets that do not comprise the client key and forward the remaining data packets of the plurality of data packets to the application server. In this way, a balance between the speed of processing or forwarding data packets and system security can be set, thereby increasing the system's efficiency.

In the above defined method, the client key may be a client token. The key generations appliance may comprise a token application programming interface, API, to provide the client token.

The key generation appliance and the control appliance may be communicatively coupled. The key generation appliance and the control appliance may exchange the or one or more respective client key(s). Alternatively, or additionally, the key generation appliance and the control appliance may be in possession of, i.e. have stored, and/or may have previously communicated and/or may communicate key generation data based on which the or one or more respective client key(s) may be generated and/or validated. In other words: The control appliance may be configured to validate if the client key was generated by the key generation appliance, for example based on a shared secret, a shared key generation process and/or shared key generation data.

Additionally, or alternatively, the key generation appliance and the control appliance may be comprised by a (higher level) device, e.g. a network traffic control device. Additionally, or alternatively, the key generation appliance may be comprised by the control appliance, or vice versa.

Additionally, or alternatively, the key generation appliance, the control appliance and/or the network traffic control device may be comprised by the application server and may prevent malicious data packets from reaching a specific server application within the server, such as a game application, as pointed out above.

According to one embodiment, determining whether the data packet comprises the client key, includes: determining whether the client key comprised by the data packet is valid.

For example, the key generation appliance may provide the client with a plurality of client keys, in particular, periodically provide the client device with a, in particular a new, client key. Thereby, only the most recently received client key may be a valid client key. Thus, the client key may be regularly or periodically exchanged, thereby invalidating previous client keys.

Additionally or alternatively, the client key may (only) be valid for a predetermined amount of time. In other words, the client key may be (automatically) invalidated after a predetermined amount of time has expired. In one example, the key generation appliance may provide the client with a plurality of client keys, in particular, periodically provide the client device with a new client key upon request of the client device. Put in another way: The client device requests a new client key if the client key has expired or prior to the expiration of the client key. In that manner, the method allows for an enhanced prevention of data packets with forged or intercepted client key from reaching the application server.

According to one embodiment, determining whether the data packet comprises the client key, includes: determining, in particular based on a timestamp of the client key, whether the client key comprised by the data packet has not expired.

The timestamp may be indicative of the point in time when the client key was generated and/or when the client key was provided to the client device. In other words: the method may comprise the step of determining, based on the timestamp of the client key, whether a predetermined time interval has expired since the generation and/or provision of the client key.

Additionally, or alternatively, the timestamp may be indicative of the point in time when the client key comprised by the data packet expires. In other words: The method may comprise the step of determining, by the key generation appliance, in particular while generating the client key, the point in time when the client key will expire and/or a time period after which the client key expires; and determining, by the control appliance, based on the timestamp of the client key, whether the point in time has passed and/or whether the time period has lapsed.

Thereby, a client key may be provided to the client device that is valid only for a limited, in particular predetermined, time period, for example about a time period of less than 1 minute, of about 1 minute, of about 1-5 minutes or of about 1-30 minutes. In that manner, malicious users may be prevented from performing attacks based on extracted or intercepted client keys, for example by inspecting others or their own network traffic.

According to the invention, the client key provided to the client device is a first client key, and determining whether the data packet comprises the client key, comprises, in particular consists of: determining, whether the data packet comprises the first or a second client key, wherein the second client key is derivable from the first client key, and wherein the second client key is smaller in size than the first client key.

The second client key may be a part of the first client key, in particular may be shorter than the first client key and/or may comprise fewer bytes than the first client key. In other words: The second client key may represent a fraction of the first client key, for example 1/2 of, 1/4 of, 1/16 of or 1/32 of the first client key, in particular the first 1/2 of, the first 1/4 of, the first 1/16 of or the first 1/32 of the first client key. In one example, the first client key comprises or consists of 64 bytes, wherein the second client key comprises or consists of the first 4 bytes of 64 bytes of the first client key.

The second client key may be derivable from the first client key based on a shared secret, e.g. a secret shared between the key generation appliance and the control appliance. For example, the second client key may be derivable from the first client key by XORing a or the part of the first client key with the shared secret. The shared secret may be a static secret. Alternatively, or additionally, the second client key may be derivable from the first client key by taking a fixed set of non-consecutive bits from the first client key, hashing the first client key and taking specific bits from the result, and/or by any other deterministic computation that can be performed on the first client key to derive the second client key.

Thereby, the size of the data packets to be transmitted and/or packet transmission time may be reduced. In particular, the time spent by the control appliance for determining whether the data packet forms malicious network traffic, i.e., whether or not the data packet comprises the client key, may be reduced. Moreover, the control appliance may store only the second client key, thereby efficiently using the storage capacities available to the control appliance.

In addition, by using the second client key, in particular a second client key comprising a specific bit sequence that is not comprised by the first client key, forging the second client key, e.g. by a malicious user inspecting their own traffic, is hindered. Thus, the security of the method is further enhanced.

According to the invention, determining whether the data packet comprises the client key, comprises, in particular consists of: determining, whether a previous data packet previously received from the client device comprises the first client key; and determining whether the data packet comprises the second client key.

According to one embodiment, determining whether the data packet comprises the first client key, comprises, in particular consists of: determining, whether a previous data packet previously received from the client device comprises the second client key; and determining whether the data packet comprises a third client key different from the second client key, wherein the third client key is derivable from the first client key.

The third client key may be of the same length as the second client key. A different short client key, e.g. a different second or third client key may be sent with every packet. E.g. the data packet may first comprise the first two bytes of the first client key, then the second two bytes, and so forth, or an arbitrary permutation of that sequence, or a sequence of different values derived from the first client key as described above. The control appliance may then expect to receive a specific pattern of different short client keys (second and/or third client keys) and will then, for example, block traffic that always includes the same short client keys (second and/or third client keys).

The method may also comprise the step of determining, whether the previously received data packet and the (subsequently received) data packet are received from the same client device. Said determination may be based on parameters or source information comprised or indicated by the data packets, in particular the respective headers of the data packets.

In that manner, a part of the client key or a shorter client key derivable from the complete client key is only accepted as the complete client key if the complete client key was comprised by a previous or first data packet received from the client device. Thereby the size of the subsequent data packets to be transmitted and/or the packet transmission time is reduced whilst securely protecting the application server from attacks.

Moreover, by altering the part of the client key or the shorter client key derivable from the complete client key, the security of the method is further enhanced.

According to one embodiment, determining whether the data packet comprises the client key, comprises: determining, whether the client key comprised by the data packet is associated with the client device and/or a user of the client device.

The client key may be associated with the client device or a user, in particular a user account of a user, of the client device, i.e., may be different for each client device or user of the client device. In that manner, the (user of a) transmitting client device of a received data packet may be reliably identified.

The determination may, for example, be based on source information, e.g., the IP address, indicated in the data packet, in particular in the header of the data packet, whereas the client key may be incorporated in the packet payload. Hence, both the packet header and the packet payload are used to recognize traffic as legitimate or malicious. Thereby, network attack protection, in particular the security of the described method, is further enhanced.

According to one embodiment, determining whether the data packet comprises the client key, comprises: determining, whether the data packet comprises the client key at a predetermined position within the data packet, in particular within a payload and/or a header of the data packet.

The client key may be comprised within the data packet at the end of the header or at the beginning of the payload, thereby extending a, in particular standardized, data packet header. Providing the client key at the predetermined position may further reduce processing time of the control appliance, i.e., the data packet transmission time from the client device to the application server via the control appliance and/or may allow the implementation of the method within various types of network structures.

According to one embodiment, the method further comprises: receiving, by the key generation appliance, an authentication key, wherein the authentication key is indicative of an authentication of the client device and/or a user of the client device; providing, by the key generation appliance, the client key to the client device in response to the receipt and/or a validation of the received authentication key.

In particular, the key generation appliance may provide the client key to the client device only in response to the receipt and/or a validation of the received authentication key. Accordingly, the key generation appliance may provide any subsequent client key to the client device only in response to a respective additional or repeated receipt and/or validation of the received authentication key. Alternatively, the key generation appliance may (periodically) provide a (new) client key to the client device in response to the initial receipt and/or validation of the received authentication key.

The authentication key may be received, by the key generation appliance, from an authentication appliance or directly from the client device. In other words: The authentication key is exchanged with the client key at the key generation appliance. The authentication key may be an authentication token representing an authentication of the client device or a user (account of the user) of the client device, such as a JSON Web Token. The authentication key may contain a digital signature of the authentication appliance.

Exchanging the authentication key with the client key, i.e., incorporating the client key in the data packet rather than using the authentication key directly, not only enhances the protection against forgery, but also increases the efficiency of the method, in particular the determination/validation of the client key by the control appliance. For example, the client key may be smaller in size and be particularly designed for the determination and validation mechanism within the controlling appliance.

Furthermore, the separation of the authentication key and the client key allows for reduced coordination between the systems controlled by an authentication appliance providing the authentication key and the control appliance/key generation appliances. For example, new key clients may be periodically created, including changing the whole structure of the key client, without the need of changing the authentication key or adapting the authentication appliance.

According to one embodiment, the method further comprises: receiving, by the key generation appliance, a platform key associated with the client device; providing, by the key generation appliance, the client key to the client device in response to the receipt and/or a validation of the received platform key.

In particular the key generation appliance may provide the client key to the client device only in response to the receipt and/or a validation of the received platform key. The platform key may be received from the client device. Alternatively, or additionally, the platform key may be received from or via the authentication appliance. For example, the key generation appliance, may provide the client key to the client device only if both the authentication key and the platform key was received and/or a validated.

The platform key may be a static key or secret that is associated with, i.e., baked into the client, and therefore may only change on client updates. The requirement of the platform key allows for identifying reverse-engineering attempts by malicious users, for example when the authentication appliance receives requests for a client key with a valid authentication key but an invalid platform key, or vice-versa.

According to one embodiment, the method further comprises: receiving, by an authentication appliance, user credentials of a or the user of the client device; transmitting, by the authentication appliance, the or an authentication key to the key generation appliance and/or to the user device in response to the receipt of the user credentials and/or a validation of the received user credentials.

For example, a user of a client device may send user credentials to the authentication appliance. In response thereto, the authentication appliance may provide the user or client device with the authentication key which may be used for indicating to other appliances or services the authentication of the user or the client device. Those other appliances or services only need to validate the authentication key and do not need to verify the credentials again. As the receipt and/or validation of the user credentials is (already) performed by the authentication appliance and the control appliance operates with the client key that was exchanged with the authentication key, the efficiency and reliability of the method is further increased. Moreover, by providing a client key only upon the authentication of a user, a user account or the client device, any client key and thus any received data packet comprising a client key may be tied to the authenticated user, user account or client device. Thereby, the process of identifying and blocking malicious users or user devices is enhanced.

According to another, possibly independent embodiment, there is provided an apparatus for preventing or blocking malicious network traffic, the apparatus comprising: a control appliance; and a key generation appliance; wherein the apparatus is configured to perform any of the above described methods.

According to another, possibly independent embodiment, there is provided a system for preventing malicious network traffic, the system comprising: the above described apparatus; an authentication appliance, wherein the authentication appliance is configured to: receiving user credentials of a or the user of the client device; transmitting the or an authentication key to the key generation appliance in response to the receipt of the user credentials and/or a validation of the received user credentials.

According to one embodiment, the system further comprises: the application server; and/or the client device.

According to another, possibly independent embodiment, there is provided a computer program comprising instructions which, when the program is executed by a computer, cause the computer to carry out one of the above described methods.

According to another, possibly independent embodiment, there is provided a computer-readable medium comprising instructions which, when executed by a computer, cause the computer to carry out one of the above described methods.

### BRIEF DESCRIPTION OF THE DRAWINGS

The present invention may be better understood from reading the following description of non-limiting embodiments, with reference to the attached drawings, wherein:
Fig. 1 shows a flowchart of a first method for preventing malicious network traffic;
Fig. 2 shows a flowchart of a second method preceding the first method; and
Fig. 3 shows a network system configured to perform method the first and/or the second method.

### DETAILED DESCRIPTION OF THE PREFERRED EMBODIMENTS

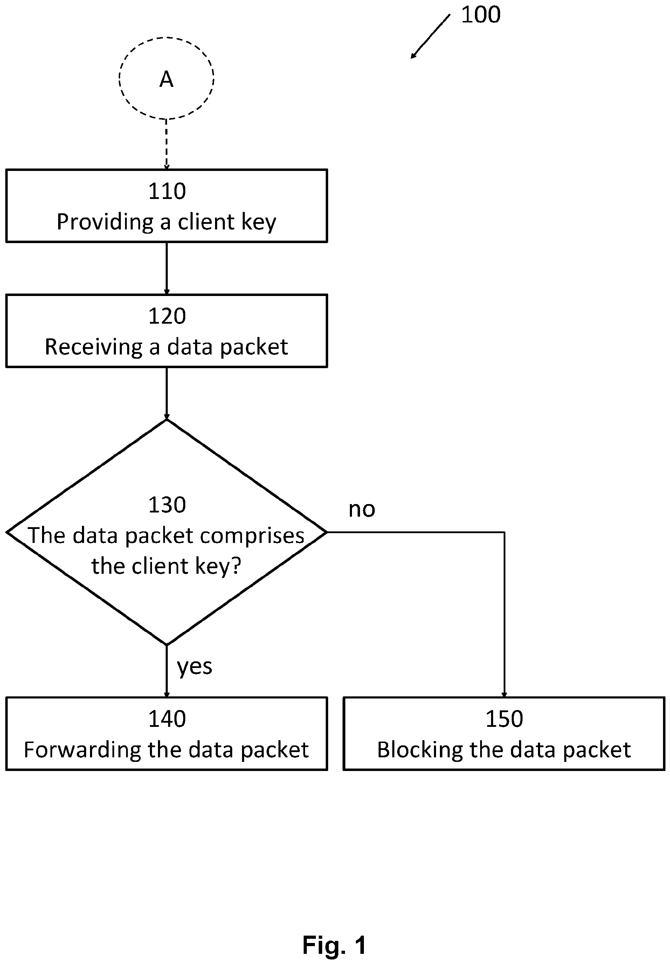

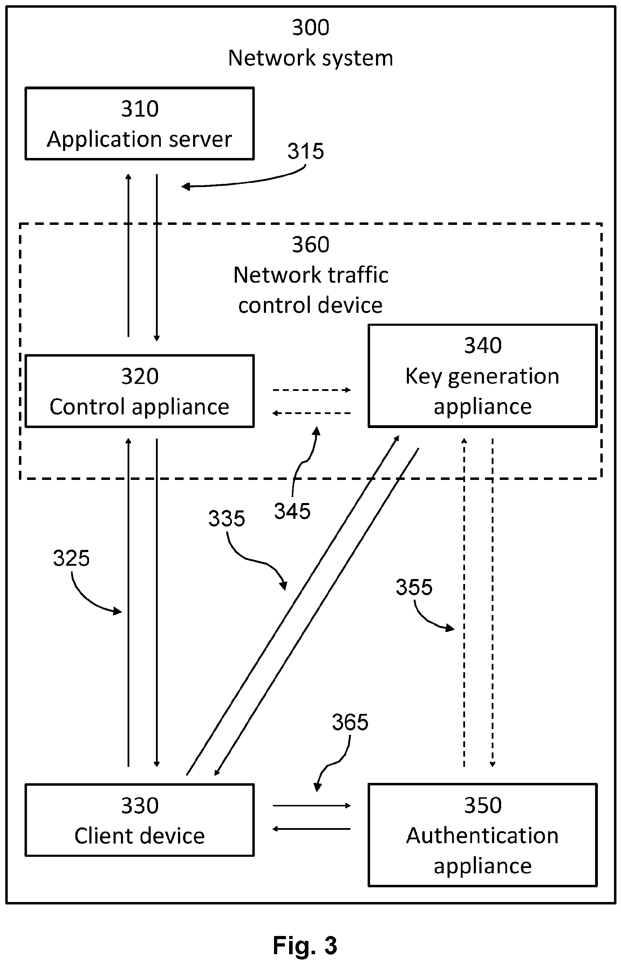

Figure 1 shows a flowchart of a method 100 for preventing or blocking malicious network traffic, in particular for preventing malicious network data packets from reaching an application server. The method 100 may be performed by a at least some of the network components comprised by the network system 300 shown in figure 3.

The method 100 starts with step 110 in which a client key is provided by a key generation appliance 340 to a client device 330. The key generation appliance 340 may be comprised by a network traffic control device 360. In other words, the client key may be provided to the client device 330 by the network traffic control device 360.

The client key may be a key generated by the key generation appliance 340. The client key may further be particularly designed for a control process performed by a control appliance 320 as described in more detail below.

The network system 300 and the method 100 may be a system and a method used for a gaming application, for example for an online gaming application. That is, the client device 330 may be a game client. The application server 310 may be a game server. The key generation appliance 340 may be a token API. The client key may herein also be referred to as a first client key or a client token, in particular a client long token.

The client key may be generated for, and/or associated with, a specific client device 330. The client key may be provided to the client device 330 upon request. For example, the key generation appliance 340 may provide client device 330 with the client key, i.e. transmit the client key to the client device 330, in response to a request received by the client device 330.

In step 120, a control appliance 320 receives a data packet from the client device 330. The data packet is intended for the application server 310. In other words, the client device 330 transmits the data packet to the application server 310 via control appliance 320.

The control appliance 320 may be comprised by the network traffic control device 360. In other words, the data packet intended for the application server 310 may be received by the network traffic control device 360.

In step 130, the control appliance 320 determines whether the data packet received from the client device 330 comprises the client key that was previously provided to the client device 330 by the key generation appliance 340 in step 110.

If the data packet received from the client device 330 comprises the client key, as determined in step 130, the control appliance 320 forwards the data packet to the application server 310. If the data packet received from the client device 330 does not comprise the client key, as determined in method step 130, the control appliance 320 blocks the data packet in step 150, i.e. does not forward the data packet to the application server 310.

Thereby, all data packets that do not comprise the client key and that are transmitted from the client device 330 to the application server 310 are prevented from reaching the application server 310 by the control appliance 320 controlling the network traffic between client 330 and application server 310.

In that manner, the network traffic between the client device 330 and the application server 310 is controlled on a packet-by-packet basis. In other words, the control appliance 320 may determine, whether a data packet belongs to malicious network traffic or is part of a network attack, such as a DDoS attack, based on the content of the data packet itself.

That is to say that the control appliance 320 may even detect a first malicious data packet of an attack performed against the application server 310. Hence, the control appliance 320 or any other network component of the network system 300 does not need to detect patterns within the network traffic in order to identify malicious network packets. As a process based on pattern detection inherently blocks too many or too few data packets, the method described herein is able to block (i) all malicious data packets and (ii) only malicious data packets in a deterministic manner.

Referring now in more detail to method step 130 in which the control appliance 320 determines whether the data packet received from the client device 330 comprises the client key that has been previously provided to the client device 330 by the key generation appliance 340.

The control appliance 320 may determine that the data packet comprises the client key only if the client key (or part of the client key, or another client key derivable from the client key, as described below) comprised by the data packet is valid. A valid client key may be the latest or newest client key of a plurality of client keys previously provided to the client device 330 by the key generation appliance 340.

A valid client key may be, for example, a client key that has not yet expired. An expired client key may be a client key that has been replaced by a newer or subsequent client key.

Additionally, or alternatively, a client key (or part of the client key, or another client key derivable from the client key, as described below) may have a limited time of validity. In other words, a client key may be determined to be an expired client key if a predetermined time interval has expired or elapsed since the client key has been generated by the key generation appliance 340 and/or provided to the client device 330. Put in another way, the control appliance 320 may determine an age of the client key, for example based on a timestamp of the client key, and may determine that the client key is an expired client key if the age of the client key exceeds a predetermined threshold age. Additionally, or alternatively, the control appliance 320 may determine that the client key is an expired client key if the point in time or time interval given by a timestamp of the client key has passed. In other words, the key generation appliance 340, in step 110, may define when the client key will expire.

Thus, a new client may be provided to the client device by the key generation appliance 340, in particular upon request by the client device 330, if a previous client key has become invalid and/or has expired or prior to the expiration or invalidation of the client key.

The control appliance 320 may further determine, that the data packet comprises the client key if the data packet comprises at least a part of the client key, in particular (only) a part of the client key or another client key derivable from the client key. In other words, the data packet sent from the client device 330 to the application server 310 via the control appliance 320 may comprise a second client key, or a client short (or tiny) key, or a client short token. The second client key may represent a part of the first (complete) client key. The second client key may be shorter and/or smaller in size compared to the first client key. Put in yet another way: The method may determine that the client is comprised by the data packet even if the data packet (only) comprises the second client key.

In that manner, the data packets sent from the client device 330 via the control appliance 322 the application server 310 may be smaller in size and still comprise the or a valid client key. Moreover, the determination performed by the control appliance 320 in method step 130, whether the data packet comprises the client key, may be performed in a more efficient way, in particular faster. Furthermore, the control appliance 320 may store only the second, i.e. shorter, client key in a memory associated with or used by the control appliance 320, thereby further enhancing the efficiency of the method 100, the network traffic control device 360 and the network system 300.

The control appliance 320 may further determine in step 130 that the data packet comprises the client key by determining that the data packet comprises at least the second client key, in particular only the second client key, in combination with the determination that a previous data packet previously received from the client device comprises the (complete, i.e. first) client key.

In other words, a first data packet sent from the client device 330 to the application server 310 may be forwarded by the control appliance 320, i.e. may pass the control appliance 320, only if said first data packet comprises the first client key or client long key. A subsequently received second data packet sent from the client device 330 to the application server 310 may be forwarded by the control appliance 320 only if the second data packet comprises the first client key or the second client key, i.e. the client short key.

In that manner, it is ensured that the client device is or was in possession of the first client key. Hence, the efficiency of the network system 300 or the method 100 may be enhanced by using the client short key whilst ensuring security and/or reliability of the system and method.

The control appliance 320 may only forward the data packet received from the client device 330 to the application server 310 if the second client key comprised by the second data packet is associated with, i.e. belongs to, is based on, is derivable from, or is a part of, the first client key comprised by a first data packet previously received. Upon provision of a new or subsequent client key by the key generation appliance 340 to the client device 330, the control appliance 320 may only forward a data packet comprising a respective new second client key that may represent a part of the new first client key, if a data packet comprising the new first client key has been previously received. In other words, in order to have all data packets forwarded to the application server 310, the provision of a new client key by the key generation appliance 340 requires the incorporation of the new client key in any subsequent data packet sent by the client device 330.

The control appliance 330 may determine in step 130 that the data packet comprises the client key if the client key comprised by the data packet is associated with the client device and/or a user of the client device. The control appliance 320 may store, or be otherwise in possession of, data pairs indicating that a specific client key belongs, i.e. is associated with, a specific client device and/or a specific user of the specific client device. The control appliance 320 may perform said determination, for example, based on source information comprised by the data packet, in particular comprised in the header of the data packet.

The control appliance 330 may determine in step 130 that the data packet comprises the client key if the data packet comprises the client key at a predetermined position within the data packet. For example the control appliance 330 may determine that the data packet comprise the client key only if the client key is positioned at the and of the header of the data packet and/or at the beginning of the payload of the data packet, or at a predetermined position within the header and/or within the payload of the data packet.

Similarly, the control appliance 330 may determine, in the above-mentioned exemplary method steps comprised by the method step 130, that the data packet does not comprise the client key if the above described requirements are not fulfilled and may thus block the respective data packets, as described with reference to step 150.

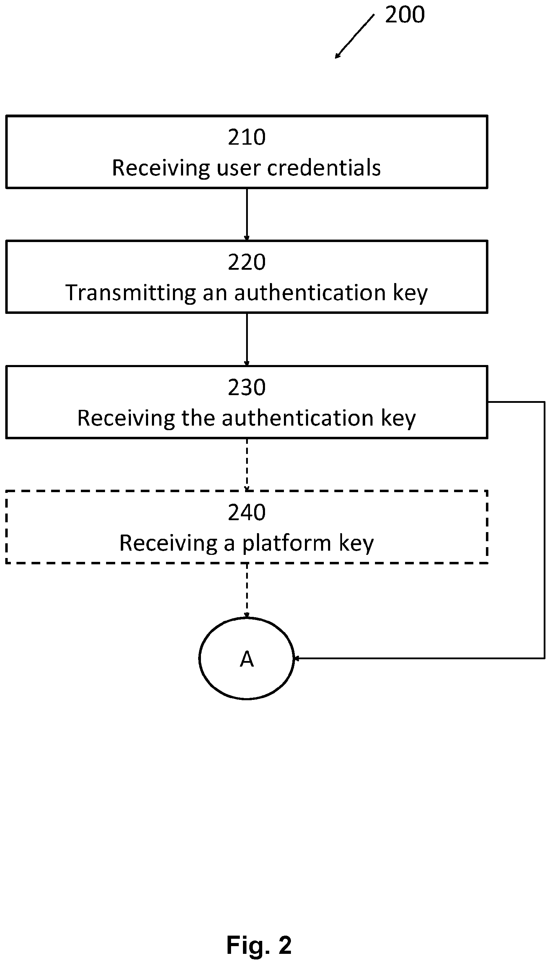

Prior to providing the client key by the key generation appliance 340 to the client device 330, the method 100 may perform some or all of the method steps 210 to 240 of method 200, a flowchart of which is shown in figure 2.

In a first method step 210 an authentication appliance 350 receives user credentials, i.e. user identification data, such as a user name, and/or user security data, such as a user password, from a user of the client device 330. The user credential credentials may be transmitted from the client device 330 to the authentication appliance 350.

In response to the receipt and/or a validation of the received user credentials, the authentication appliance 350 transmits an authentication key to the user device in step 220. In other words, the client device receives the authentication key after having transmitted user credentials to the authentication appliance 350, i.e. after having logged in at the authentication appliance 350 or an authentication service at the authentication appliance 350.

The user of the client device may have a personal account at the authentication appliance 350 that is used to authorise the user for usage of specific services, such as attending a game located at a game server, e.g. the application server 310. The client device 330 may use the authentication key to prove to a server, e.g. the application server 310, that the client device 330 is operated by a specific user, for example a player, that has been authenticated by the authentication appliance 350. However, the authentication key that may be used as a proof of authentication in different server systems and/or for different purposes, may not be suitable or less suitable for controlling network traffic in order to prevent malicious data packets from reaching the application server 310. For example, the authentication key may be too long or too big in size to be incorporated in the data packets to be transmitted from client device 330 via control appliance 320 to application server 310.

The client device 330 sends the authentication key to the key generation appliance 340 which receives the authentication key in step 230. In exchange to the received authentication key received from the client device 330, the key generation appliance 340 may provide the client device 330 with the client key, in particular with the client key associated with the client device 330, as discussed with reference to method step 110.

In that manner the client key may be used by the control appliance 320 in order to determine whether or not to forward the data packet to the application server 310. A client key may be generated that is specifically designed for its use by the control appliance 320. Furthermore, the communication of the client key between the control appliance 320 and the key generation appliance 340 may be facilitated by using a client key generated by the key generation appliance 340 rather than using the authentication key. In particular, the control appliance 320 and the key generation appliance 340 may be based or comprised by the network traffic control device 360 as discussed above. As a further advantage, the client key may be generated and/or renewed independently of the authentication key, which may also be used for other purposes, thereby avoiding additional network traffic and/or additional coordination between the control appliance 330, the key generation appliance 340 and/or the authentication appliance 350. On the other hand, any data packet comprising the client key may be tied to an authentication key, i.e. to a user and/or a user device authenticated by an additional, independent authentication appliance.

Additionally, or alternatively, the authentication appliance 350 may directly communicate with the key generation appliance 340. In particular, the authentication appliance 315 may directly transmit the authentication key associated with the client device 330 to the key generation appliance 340.

In addition to, or in lieu of, the authentication key, the client device 330 may transmit a platform key associated with the client device to the key generation appliance 340, which is received by the key generation appliance 340 in step 240. The key generation appliance 340 may provide the client device 330 with the client key only upon receipt of the platform key and/or the authentication key. The platform key may be static, i.e. may not change upon a change of a user of the client device. In that manner, both the user of the client device and the client device may be authenticated and/or validated by the key generation appliance 340 prior to a provision of the client key to the client device 330 by the key generation appliance 340, as discussed with reference to method step 110.

Alternatively, or additionally, the client device 330 may communicate the platform key, or platform token, to the authentication appliance 350, wherein the authentication appliance 350 subsequently transmits the platform key and/or the authentication key to the key generation appliance 340.

Figure 3 shows the network system 300 configured to perform the methods 100 and 200 shown in figures 1 and 2, as described with reference to said figures 1 and 2. In particular, figure 3 shows network traffic control device 360 configured to perform method 100 as described with reference to figure 1.

More particularly, the network system 300 comprises the application server 310 communicatively coupled to control appliance 320 by a first network link 315. The network system 300 further comprises the client device 330 communicatively coupled to control appliance 320 and key generation appliance 340 by a second link 325 and a third network link 335, respectively. The network system 300 further comprises the key generation appliance 340 communicatively coupled to control appliance by a fourth network link 345. The network system 300 further comprises authentication appliance 350 communicatively coupled to the key generation appliance 340 by a fifth network link 355 and communicatively coupled to client device 330 by a sixth network link 365.

### LIST OF REFERENCE SIGNS

- 100: First method
- 110 - 150: Method steps of the first method
- 200: Second method
- 210 - 240: Method steps of the second method
- 300: Network system
- 310: Application server
- 315: First network link
- 320: Control appliance
- 325: Second network link
- 330: Client device
- 335: Third network link
- 340: Ken generation appliance
- 345: Fourth network link
- 350: Authentication appliance
- 355: Fifth network link
- 360: Network traffic control device
- 365: Sixth network link

## Claims

1. A method for preventing malicious network traffic, the method comprising:
providing (110), by a key generation appliance, a client key to a client device;
receiving (120), by a control appliance, a data packet intended for an application server from the client device;
determining (130), by the control appliance, whether the data packet comprises the client key;
forwarding (140) the data packet, by the control appliance, to the application server in response to a determination that the data packet comprises the client key; and/or
blocking (150) the data packet, by the control appliance, in response to a determination that the data packet does not comprise the client key;
wherein the client key provided to the client device is a first client key, and wherein determining whether the data packet comprises the client key, comprises:
determining, whether a previous data packet previously received from the client device comprises the first client key; and
determining whether the data packet comprises a second client key derivable from the first client key, wherein the second client key is smaller in size than the first client key.

2. The method of claim 1, wherein determining whether the data packet comprises the client key, comprises:
determining whether the client key comprised by the data packet is valid.

3. The method of any of the preceding claims, wherein determining whether the data packet comprises the client key, comprises:
determining, in particular based on a time stamp of the client key provided to the client device, whether the client key comprised by the data packet has not expired.

4. The method of claim 1,
wherein determining whether the data packet comprises the second client key, comprises:
determining, whether another previous data packet previously received from the client device comprises the second client key; and
determining whether the data packet comprises a third client key different from the second client key, wherein the third client key is derivable from the first client key.

5. The method of any of the preceding claims, wherein determining whether the data packet comprises the client key, comprises:
determining, whether the client key comprised by the data packet is associated with the client device and/or a user of the client device.

6. The method of any of the preceding claims, wherein determining whether the data packet comprises the client key, comprises:
determining, whether the data packet comprises the client key at a predetermined position within the data packet, in particular within a payload and/or a header of the data packet.

7. The method of any of the preceding claims, further comprising:
receiving (230), by the key generation appliance, an authentication key, wherein the authentication key is indicative of an authentication of the client device and/or a user of the client device;
providing (110), by the key generation appliance, the client key to the client device in response to the receipt and/or a validation of the received authentication key.

8. The method of any of the preceding claims, further comprising:
receiving (240), by the key generation appliance, a platform key associated with the client device;
providing (110), by the key generation appliance, the client key to the client device in response to the receipt and/or a validation of the received platform key.

9. The method of any of the preceding claims, further comprising:
receiving (210), by an authentication appliance, user credentials of a or the user of the client device;
transmitting (220), by the authentication appliance, the or an authentication key to the key generation appliance and/or to the user device in response to the receipt of the user credentials and/or a validation of the received user credentials.

10. The method of any of the preceding claims, comprising:
receiving (120), in particular successively receiving, by the control appliance, a plurality of data packets intended for the application server from the client device;
determining (130), by the control appliance, whether multiple, in particular all of the plurality of data packets comprise the client key;
forwarding (140), by the control appliance, all data packets of the multiple data packets that comprise the client key to the application server; and/or
blocking (150), by the control appliance, all data packets of the multiple data packets that do not comprise the client key.

11. The method of claim 1, comprising:
blocking (150), by the control appliance, all data packets of the multiple data packets that do not comprise the client key; and
forwarding (140) the remaining data packets of the plurality of data packets to the application server.

12. An apparatus (360) for preventing malicious network traffic, the apparatus comprising:
a control appliance (320); and
a key generation appliance (340);
wherein the apparatus is configured to perform the method of any of claims 1-11.

13. A system (300) for preventing malicious network traffic the system comprising:
the apparatus (360) of claim 12;
an authentication appliance (350), wherein the authentication appliance is configured to:
receiving user credentials of a or the user of the client device (330);
transmitting the or an authentication key to the key generation appliance (340) in response to the receipt of the user credentials and/or a validation of the received user credentials.

14. The system of claim 13, further comprising:
the application server (310); and/or
the client device (330).

15. A computer program comprising instructions which, when the program is executed by a computer, cause the computer to carry out the method of any of claims 1-11.

16. A computer-readable medium comprising instructions which, when executed by a computer, cause the computer to carry out the method of any of claims claim 1-11.

## Patentansprüche

1. Verfahren zum Verhindern von bösartigem Netzwerkverkehr, wobei das Verfahren folgende Vorgänge umfasst:
Bereitstellen (110), durch eine Schlüsselerzeugungs-Appliance, eines Client-Schlüssels für eine Client-Vorrichtung;
Empfangen (120), durch eine Steuer-Appliance, eines für einen Anwendungsserver bestimmten Datenpakets von der Client-Vorrichtung;
Bestimmen (130), durch die Steuer-Appliance, ob das Datenpaket den Client-Schlüssel umfasst;
Weiterleiten (140) des Datenpakets, durch die Steuer-Appliance, an den Anwendungsserver als Reaktion auf eine Bestimmung, dass das Datenpaket den Client-Schlüssel umfasst; und/oder
Blockieren (150) des Datenpakets, durch die Steuer-Appliance, als Reaktion auf die Bestimmung, dass das Datenpaket den Client-Schlüssel nicht umfasst;
wobei der der Client-Vorrichtung bereitgestellte Client-Schlüssel ein erster Client-Schlüssel ist, und wobei das Bestimmen, ob das Datenpaket den Client-Schlüssel umfasst, folgende Vorgänge umfasst:
Bestimmen, ob ein vorheriges Datenpaket, das zuvor von der Client-Vorrichtung empfangen wurde, den ersten Client-Schlüssel umfasst; und
Bestimmen, ob das Datenpaket einen zweiten Client-Schlüssel umfasst, der vom ersten Client-Schlüssel ableitbar ist, wobei der zweite Client-Schlüssel eine geringere Größe als der erste Client-Schlüssel aufweist.

2. Verfahren nach Anspruch 1, wobei das Bestimmen, ob das Datenpaket den Client-Schlüssel umfasst, folgenden Vorgang umfasst:
Bestimmen, ob der vom Datenpaket umfasste Client-Schlüssel gültig ist.

3. Verfahren nach einem der vorhergehenden Ansprüche, wobei das Bestimmen, ob das Datenpaket den Client-Schlüssel umfasst, folgenden Vorgang umfasst:
Bestimmen, insbesondere auf der Grundlage eines Zeitstempels des der Client-Vorrichtung bereitgestellten Client-Schlüssels, ob der vom Datenpaket umfasste Client-Schlüssel noch nicht abgelaufen ist.

4. Verfahren nach Anspruch 1,
wobei das Bestimmen, ob das Datenpaket den zweiten Client-Schlüssel umfasst, folgende Vorgänge umfasst:
Bestimmen, ob ein anderes vorheriges Datenpaket, das zuvor von der Client-Vorrichtung empfangen wurde, den zweiten Client-Schlüssel umfasst; und
Bestimmen, ob das Datenpaket einen dritten Client-Schlüssel umfasst, der sich vom zweiten Client-Schlüssel unterscheidet, wobei der dritte Client-Schlüssel vom ersten Client-Schlüssel ableitbar ist.

5. Verfahren nach einem der vorhergehenden Ansprüche, wobei das Bestimmen, ob das Datenpaket den Client-Schlüssel umfasst, folgenden Vorgang umfasst:
Bestimmen, ob der vom Datenpaket umfasste Client-Schlüssel der Client-Vorrichtung und/oder einem Benutzer der Client-Vorrichtung zugeordnet ist.

6. Verfahren nach einem der vorhergehenden Ansprüche, wobei das Bestimmen, ob das Datenpaket den Client-Schlüssel umfasst, folgenden Vorgang umfasst:
Bestimmen, ob das Datenpaket den Client-Schlüssel an einer vorbestimmten Position innerhalb des Datenpakets umfasst, insbesondere innerhalb einer Nutzlast und/oder eines Headers des Datenpakets.

7. Verfahren nach einem der vorhergehenden Ansprüche, ferner umfassend:
Empfangen (230), durch die Schlüsselerzeugungs-Appliance, eines Authentifizierungsschlüssels, wobei der Authentifizierungsschlüssel eine Authentifizierung der Client-Vorrichtung und/oder eines Benutzers der Client-Vorrichtung angibt;
Bereitstellen (110), durch die Schlüsselerzeugungs-Appliance, des Client-Schlüssels für die Client-Vorrichtung als Reaktion auf den Empfang und/oder eine Validierung des empfangenen Authentifizierungsschlüssels.

8. Verfahren nach einem der vorhergehenden Ansprüche, ferner umfassend:
Empfangen (240), durch die Schlüsselerzeugungs-Appliance, eines Plattformschlüssels, der der Client-Vorrichtung zugeordnet ist;
Bereitstellen (110), durch die Schlüsselerzeugungs-Appliance, des Client-Schlüssels an die Client-Vorrichtung als Reaktion auf den Empfang und/oder eine Validierung des empfangenen Plattformschlüssels.

9. Verfahren nach einem der vorhergehenden Ansprüche, ferner umfassend:
Empfangen (210), durch eine Authentifizierungs-Appliance, von Benutzerzugangsdaten eines oder des Benutzers der Client-Vorrichtung;
Übertragen (220), durch die Authentifizierungs-Appliance, des oder eines Authentifizierungsschlüssels an die Schlüsselerzeugungs-Appliance und/oder an die Benutzervorrichtung als Reaktion auf den Empfang der Benutzerzugangsdaten und/oder eine Validierung der empfangenen Benutzerzugangsdaten.

10. Verfahren nach einem der vorhergehenden Ansprüche, umfassend: Empfangen (120), insbesondere sukzessives Empfangen, durch die Steuer-Appliance, einer Vielzahl von Datenpaketen, die für den Anwendungsserver bestimmt sind, von der Client-Vorrichtung;
Bestimmen (130), durch die Steuer-Appliance, ob mehrere, insbesondere alle, der Vielzahl von Datenpaketen den Client-Schlüssel umfassen;
Weiterleiten (140), durch die Steuer-Appliance, aller Datenpakete der mehreren Datenpakete, die den Client-Schlüssel umfassen, an den Anwendungsserver; und/oder
Blockieren (150), durch die Steuer-Appliance, aller Datenpakete der mehreren Datenpakete, die den Client-Schlüssel nicht umfassen.

11. Verfahren nach Anspruch 1, umfassend:
Blockieren (150), durch die Steuer-Appliance, aller Datenpakete der mehreren Datenpakete, die den Client-Schlüssel nicht umfassen; und
Weiterleiten (140) der verbleibenden Datenpakete der Vielzahl von Datenpaketen an den Anwendungsserver.

12. Vorrichtung (360) zum Verhindern von bösartigem Netzwerkverkehr, wobei die Vorrichtung umfasst:
eine Steuer-Appliance (320); und
eine Schlüsselerzeugungs-Appliance (340):
wobei die Vorrichtung dafür ausgelegt ist, das Verfahren nach einem der Ansprüche 1 bis 11 durchzuführen.

13. System (300) zum Verhindern von bösartigem Netzwerkverkehr, wobei das System umfasst:
die Vorrichtung (360) nach Anspruch 12;
eine Authentifizierungs-Appliance (350), wobei die Authentifizierungs-Appliance für folgende Vorgänge ausgelegt ist:
Empfangen von Benutzerzugangsdaten eines oder des Benutzers der Client-Vorrichtung (330);
Übertragen des oder eines Authentifizierungsschlüssels an die Schlüsselerzeugungs-Appliance (340) als Reaktion auf den Empfang der Benutzerzugangsdaten und/oder eine Validierung der empfangenen Benutzerzugangsdaten.

14. System nach Anspruch 13, ferner umfassend:
den Anwendungsserver (310); und/oder
die Client-Vorrichtung (330).

15. Computerprogramm, umfassend Anweisungen, die bei Ausführung des Programms durch einen Computer den Computer veranlassen, das Verfahren nach einem der Ansprüche 1 bis 11 durchzuführen.

16. Computerlesbares Medium, umfassend Anweisungen, die bei ihrer Ausführung durch einen Computer den Computer veranlassen, das Verfahren nach einem der Ansprüche 1 bis 11 durchzuführen.

## Revendications

1. Procédé pour empêcher un trafic de réseau malveillant, ce procédé comprenant la fourniture (10) par un équipement de génération de clés d'une clé client à un dispositif client,
la réception (120) par un équipement de contrôle d'un paquet de données destiné à un serveur d'application et provenant du dispositif client,
la détermination (130) par l'équipement de contrôle du fait que le paquet de données comprend ou non la clé client,
l'envoi (140) du paquet de données par l'équipement de contrôle au serveur d'application en réponse à une détermination du fait que le paquet de données comprend la clé client et/ou
le blocage (150) du paquet de données par l'équipement de contrôle en réponse à une détermination du fait que le paquet de données ne comprend pas la clé client, la clé client fournie au dispositif client étant une première clé client et la détermination du fait que le paquet de données comprend ou non la clé client comprenant
le fait de déterminer si un précédent paquet de données précédemment reçu de la part du dispositif client comprend la première clé client et
le fait de déterminer si le paquet de données comprend une seconde clé client pouvant être dérivée de la première clé client, la seconde clé client étant de plus petite taille que la première clé client.

2. Procédé selon la revendication 1, selon lequel le fait de déterminer si le paquet de données comprend la clé client comprend
le fait de déterminer si la clé client comprise par le paquet de données est valide.

3. Procédé selon l'une quelconque des revendications précédentes, selon lequel le fait de déterminer si le paquet de données comprend la clé client comprend
le fait de déterminer, en particulier sur la base d'un horodatage de la clé client fournie au dispositif client, si la clé client comprise par le paquet de données n'a pas expiré.

4. Procédé selon la revendication 1,
selon lequel le fait de déterminer si le paquet de données comprend la seconde clé client comprend
le fait de déterminer si un autre paquet de données précédent précédemment reçu de la part du dispositif client comprend la seconde clé client et
le fait de déterminer si le parquet de données comprend une troisième clé client différente de la seconde clé client, cette troisième clé client pouvant être dérivée de la première clé client.

5. Procédé selon l'une quelconque des revendications précédentes, selon lequel le fait de déterminer si le paquet de données comprend la clé client comprend
le fait de déterminer si la clé client comprise par le paquet de données est associée avec le dispositif client et/ou un utilisateur du dispositif client.

6. Procédé selon l'une quelconque des revendications précédentes, selon lequel le fait de déterminer si le paquet de données comprend la clé client comprend
le fait de déterminer si le paquet de données comprend la clé client à un endroit déterminé à l'intérieur du paquet de données, en particulier à l'intérieur d'une charge utile et/ou d'un en-tête du paquet de données.

7. Procédé selon l'une quelconque des revendications précédentes, comprenant en outre
la réception (230) par l'équipement de génération de clés d'une clé d'authentification, laquelle clé d'authentification témoigne d'une authentification du dispositif client et/ou d'un utilisateur du dispositif client, et
la fourniture (110) par l'équipement de génération de clés de la clé client au dispositif client en réponse à la réception et/ou à une validation de la clé d'authentification reçue.

8. Procédé selon l'une quelconque des revendications précédentes, comprenant en outre
la réception (240) par l'équipement de génération de clés d'une clé de plateforme associée au dispositif client et
la fourniture (110) par l'équipement de génération de clés de la clé client au dispositif client en réponse à la réception et/ou à une validation de la clé de plateforme reçue.

9. Procédé selon l'une quelconque des revendications précédentes, comprenant en outre
la réception (210) par un équipement d'authentification d'identifiants d'utilisateur d'un ou de l'utilisateur du dispositif client et
la transmission (220) par l'équipement d'authentification de la ou d'une clé d'authentification à l'équipement de génération de clés et/ou au dispositif utilisateur en réponse à la réception des identifiants d'utilisateur et/ou à une validation des identifiants d'utilisateur reçus.

10. Procédé selon l'une quelconque des revendications précédentes, comprenant
la réception (120), en particulier la réception successive, par l'équipement de contrôle d'une pluralité de paquets de données destinés au serveur d'application de la part du dispositif client,
la détermination (130) par l'équipement de contrôle de fait que de multiples, en particulier la totalité des multiples paquets de données comprennent ou non la clé client,
l'envoi (140) par l'équipement de contrôle de tous les paquets de données parmi les multiples paquets de données qui comprennent la clé client au serveur d'application et/ou
le blocage (150) par l'équipement de contrôle tous les paquets de données parmi les multiples paquets de données qui ne comprennent pas la clé client.

11. Procédé selon la revendication 1, comprenant
le blocage (150) par l'équipement de contrôle de tous les paquets de données parmi les multiples paquets de données qui ne comprennent pas la clé client et
l'envoi (140) des paquets de données restants parmi la pluralité de paquets de données au serveur d'application.

12. Appareil (360) pour empêcher un trafic de réseau malveillant, cet appareil comprenant
un équipement de contrôle (320) et
un équipement de génération de clés (340),
lequel appareil est configuré pour mettre en oeuvre le procédé selon l'une quelconque des revendications 1 à 11.

13. Système (300) pour empêcher un trafic de réseau malveillant, ce système comprenant
l'appareil (360) selon la revendication 12,
un équipement d'authentification (350), lequel équipement d'authentification est configuré pour
recevoir des identifiants d'utilisateur d'un ou de l'utilisateur du dispositif client (330) et
transmettre la ou une clé d'authentification à l'équipement de génération de clés (340) en réponse à la réception des identifiants d'utilisateur et/ou d'une validation des identifiants d'utilisateur reçus.

14. Système selon la revendication 13, comprenant en outre
le serveur d'application (310) et/ou
le dispositif client (330).

15. Programme informatique comprenant des instructions qui, quand le programme est exécuté par un ordinateur, conduisent l'ordinateur à mettre en oeuvre le procédé selon l'une quelconque des revendications 1 à 11.

16. Support lisible par ordinateur comprenant des instructions qui, quand elles sont exécutées par un ordinateur, conduisent l'ordinateur à mettre en oeuvre le procédé selon l'une quelconque des revendications 1 à 11.
